# FASCICULE DE BREVET EUROPEEN

(11) **EP 0 637 853 B1**
(45) Date de publication et mention de la délivrance du brevet: **28.05.1997**
(21) Numéro de dépôt: 94420176.3
(22) Date de dépôt: 22.06.1994
(51) Int. Cl.: H01R 4/24

(54) **Module d'interconnexion rapide de deux lignes téléphoniques monopolaires**
Schnellverbindungsmodul von zwei monopolaren Fernsprecherlinien
Rapid interconnect module of two monopolar telephone lines

(30) Priorité: 04.08.1993 FR 9309795
(43) Date de publication de la demande: 08.02.1995
(73) Titulaire: POUYET INTERNATIONAL, F-92400 Ivry sur Seine (FR)
(72) Inventeur: Bonvallat, Pierre, F-74300 Cluses (FR)
(74) Mandataire: Wind, Jacques

(56) Documents cités:
- WO-A-93/07654
- FR-A- 2 661 283

## Description

La présente invention se rapporte à un module d'interconnexion rapide, typiquement entre le réseau téléphonique et un abonné, de deux lignes téléphoniques monopaires, ce module présentant .des caractéristiques d'étanchéité lui permettant d'être installé en extérieur, par exemple en circuit aérien.

Des modules de ce type sont actuellement largement commercialisés par la Demanderesse sous la référence "MX...". et sont donc notoirement connus. Ils sont en outre largement décrits dans les documents US-A-4.614.396 et FR-A-2.661.283. Ils sont basés sur l'utilisation de fiches tubulaires autodénudantes, fendues en conséquence à au moins une de leurs deux extrémités. Il suffit alors de posséder un tournevis pour réaliser les connexions.

Une fiche fendue tubulaire autodénudante est un élément extrêmement rigide. Si l'on s'en sert avec un fil dont l'âme est en acier, cette âme d'acier vient déformer la fente de la fiche, en l'agrandissant pour pouvoir y pénétrer. Il est alors ensuite impossible d'y introduire ultérieurement des fils dont l'âme est d'un plus petit diamètre, car ils flotteraient à l'intérieur de la fente.

Par ailleurs, il est actuellement prévu plusieurs types de modules, selon en particulier qu'il s'agisse ou non d'un module à protection contre les surtensions, ce qui est assez pénalisant en ce qui concerne les coûts de fabrication, de stockage, et de gestion.

L'invention a pour objet de proposer un module qui est plus pratique, plus universel, et plus étanche que les modules précités et actuellement commercialisés par la Demanderesse. Elle se rapporte à cet effet à un module d'interconnexion rapide de deux lignes téléphoniques monopaires, caractérisé en ce qu'il est constitué de quatre éléments assemblables sur un rail métallique de support et de mise à la masse :
. un premier élément, ou élément de base de connexion de la ligne d'arrivée, qui vient se fixer sur ce rail métallique, et qui au moins comporte deux canaux d'introduction des deux fils de la ligne d'arrivée, des moyens étant en outre prévus pour connecter au rail métallique un contact métallique de mise à la masse qui traverse cet élément de base ;
. un deuxième élément, ou élément intermédiaire, qui vient coiffer le premier élément et qui contient la majeure partie de la connectique de liaison entre ces deux lignes téléphoniques, cette connectique se présentant sous la forme de pièces métalliques rigides ou semi-rigides qui sont encastrées dans cet élément intermédiaire, une discontinuité de liaison électrique y étant toutefois ménagée pour chacune des deux liaisons de ligne et cette connectique comprenant nécéssairement d'une part deux contacts métalliques à chacun au moins une fente autodénudante qui sont proéminents en direction du rail métallique de façon à recevoir, en action de connexion autodénudante, les deux fils précités de la ligne d'arrivée préalablement introduits dans lesdits canaux dudit élément de base, et comprenant nécessairement d'autre part deux autres contacts métalliques à chacun au moins une fente autodénudante qui sont à contrario proéminents en direction opposée au rail métallique de façon à pouvoir recevoir, en action de connexion autodénudante, les deux fils de la ligne de départ qui sont à connecter aux deux fils respectifs de ladite ligne d'arrivée ;
. un troisième élément, ou élément supérieur de connexion de la ligne de départ, qui est constitué, de manière connue en soi, comme une demi-douille supérieure de connexion rapide auto-dénudante d' une ligne monopaire, et qui est donc classiquement pourvu de deux canaux parallèles de réception et de guidage des deux brins de ligne à raccorder, ce troisième élément venant coiffer une première partie du deuxième élément en enfourchant, en coopération d'action de connexion autodénudante, lesdits deux autres contacts métalliques autodénudants, et ce troisième élément étant classiquement traversé par une vis, médiane et perpendiculaire au rail métallique, qui traverse totalement aussi le deuxième élément ainsi qu'au moins une partie du premier élément pour venir se visser dans un écrou ou taraudage en assurant alors le rapprochement forcé des trois éléments précités et par suite la connexion autodénudante des quatre brins de ligne ;
. et un quatrième élément qui vient coiffer, en s'enfichant, la partie restante du deuxième élément en étant ainsi positionné côte-à-côte du troisième élément et sensiblement au même niveau que ce dernier, ce quatrième élément s'enfichant ainsi par cinq cosses de connexion électrique, dont une cosse de liaison audit contact métallique de mise à la masse qui lui-même traverse le premier et le deuxième élément, et dont deux autres paires de cosses qui se connectent respectivement à chaque côté respectif desdites deux discontinuités de liaison électrique qui sont prévues dans le deuxième élément, et ce quatrième élément formant réceptacle pour un circuit électrique qui est branché sur ces cinq cosses et qui au minimum vient assurer les deux liaisons électriques manquantes, en raison desdites discontinuités, dans la connectique que contient le deuxième élément.

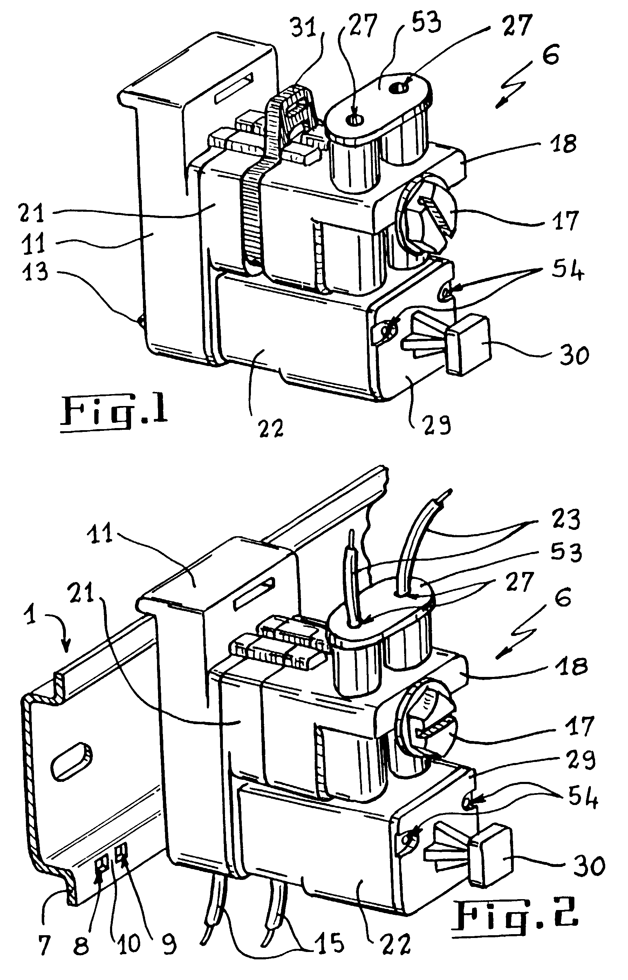

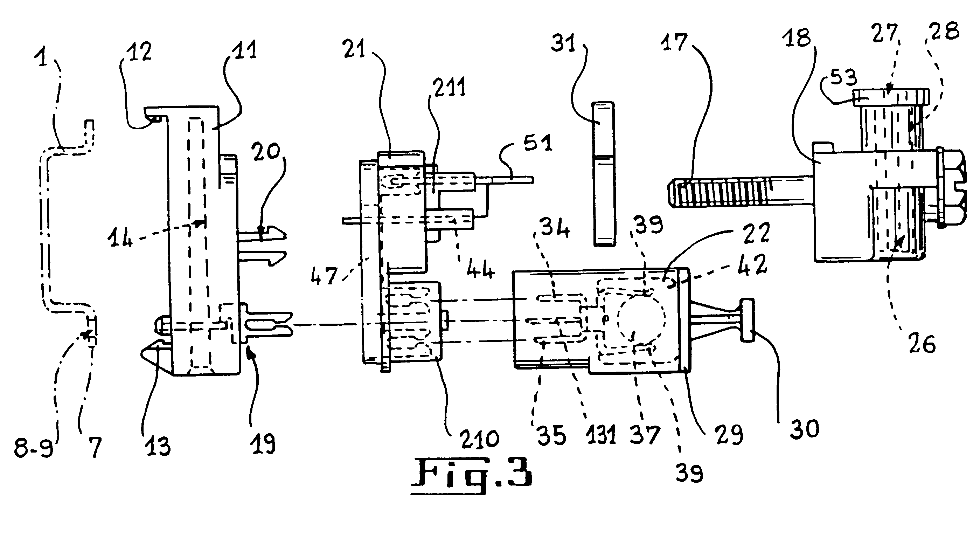

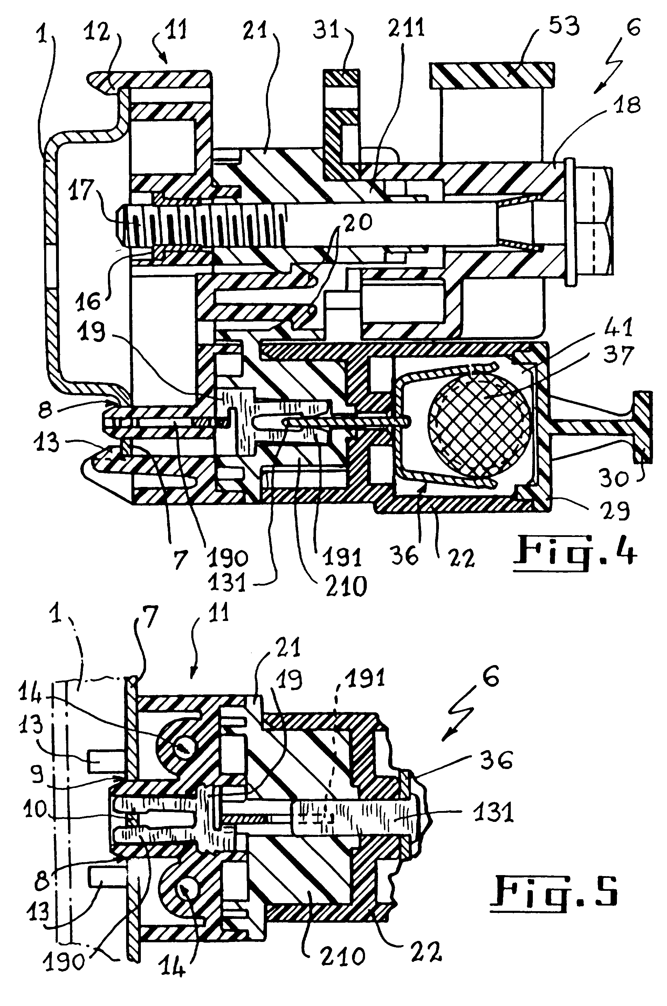

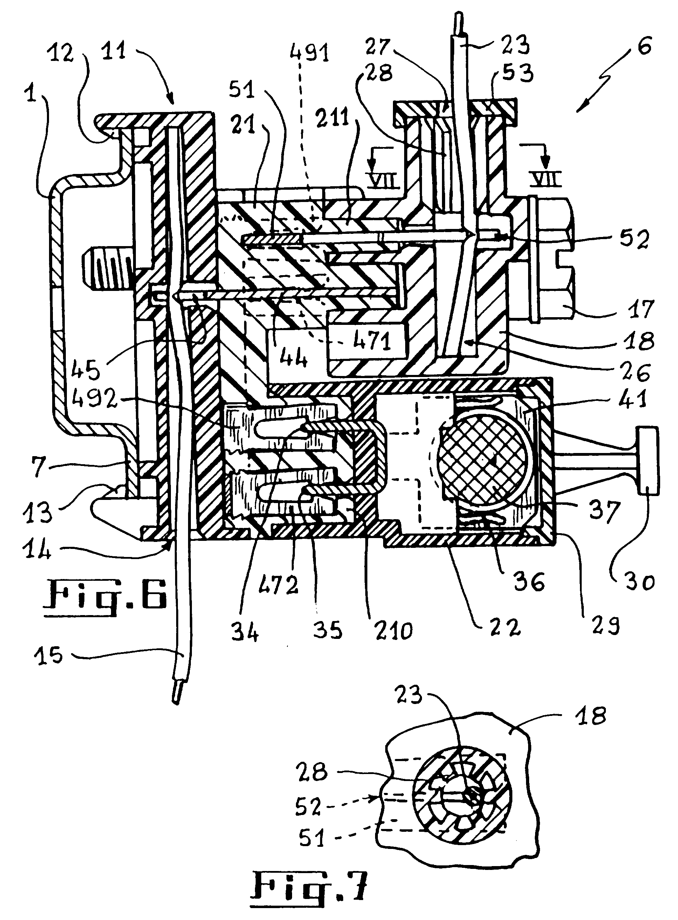

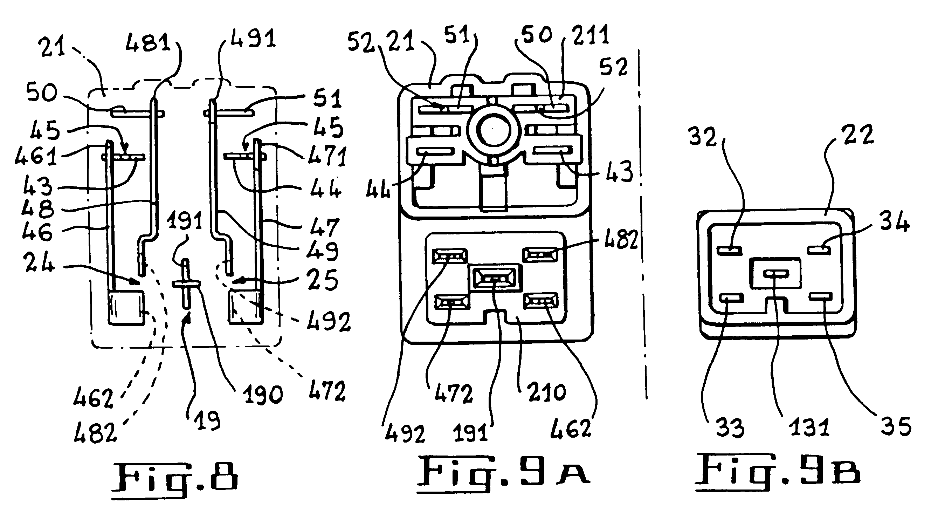

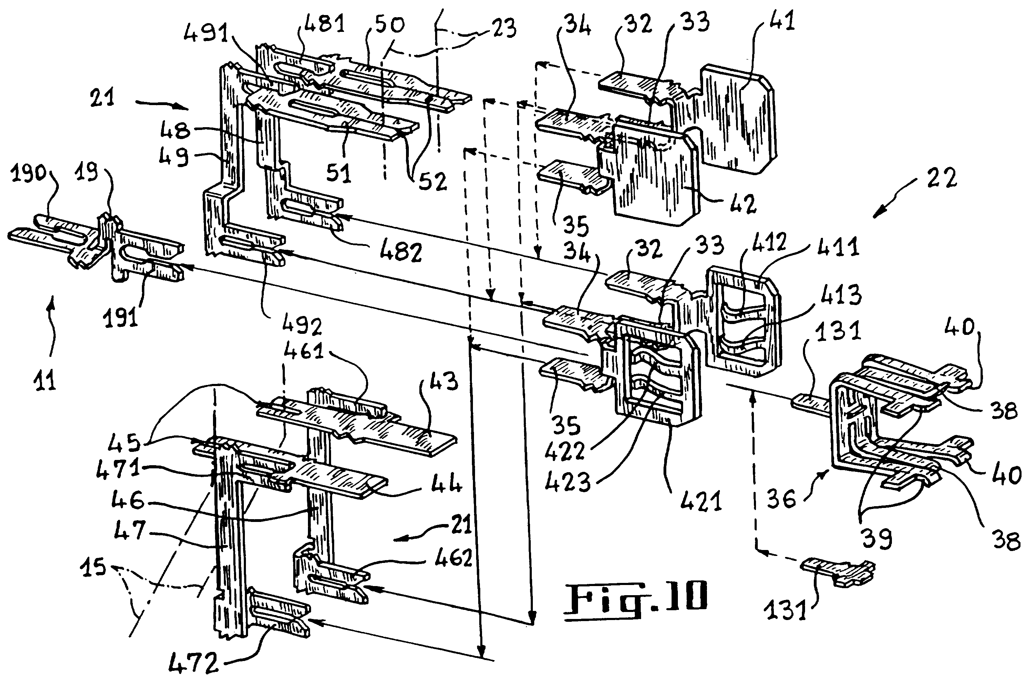

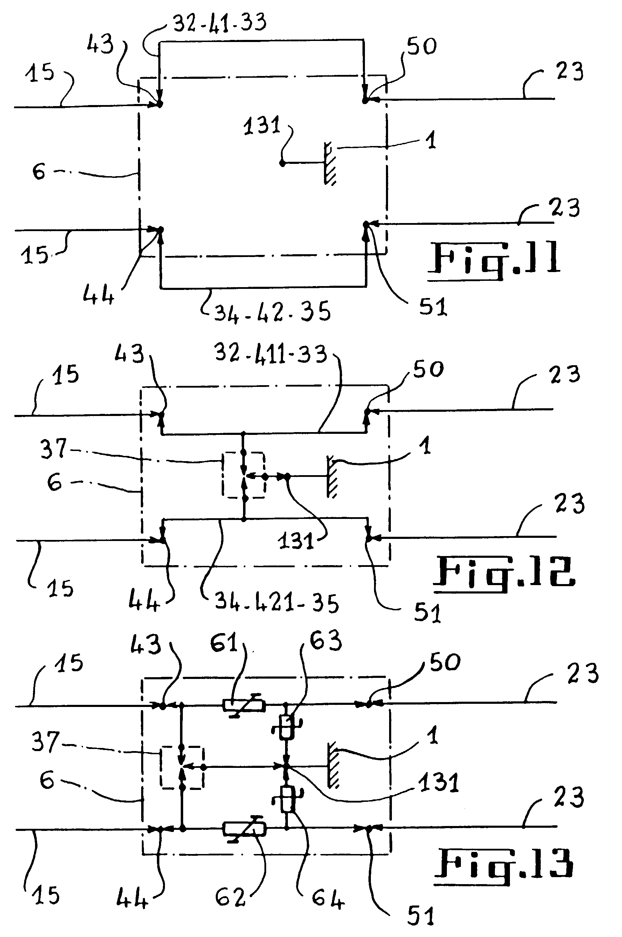

L'invention sera bien comprise, et tous ses avantages et autres caractéristiques ressortiront, lors de la description suivante d'un exemple non limitatif de réalisation de ce module d'interconnexion rapide, en référence au dessin schématique annexé dans lequel :
. Figure 1 est une vue d'ensemble, en perspective, du module tel qu'il est livré au client avant toute connexion ;
. Figure 2 montre ce même module après montage sur son rail métallique récepteur et connexion des deux paires de fils ;
. Figure 3 est une vue latérale, en éclaté, du module de la figure 1 ;
. Figure 4 est une coupe longitudinale, verticale, et médiane, du module de la figure 1, monté toutefois sur son rail récepteur;
. Figure 5 est une coupe horizontale partielle, montrant le détail de la connexion de masse de ce module sur son rail métallique récepteur ;
. Figure 6 est une coupe, longitudinale et verticale, du module de la figure 2, réalisée au niveau de deux canaux récepteurs conjugués de deux brins à interconnecter l'un à l'autre ;
. Figure 7 est une petite vue en coupe de détail, réalisée selon VII-VII de Figure 6 ;
. Figure 8 est une vue par l'arrière de l'élément intermédiaire, sur laquelle sont seuls visibles les lames et contacts métalliques ;
. Figure 9A est à l'inverse une vue par l'avant de ce même élément intermédiaire ;
. Figure 9B est une vue semblable à Figure 9A, mais en vue par l'arrière du quatrième élément du module ;
. Figure 10 est une perspective structurelle éclatée des divers éléments métalliques, formant toute la connectique, que contient ce module et selon deux formes de réalisation de son quatrième élément ;
. Figure 11 est un schéma électrique de ce module dans la première de ces deux formes de réalisation de son quatrième élément ;
. Figure 12 est un schéma électrique de ce module dans la deuxième de ces deux formes de réalisation de son quatrième élément ;
. Figure 13 est un schéma électrique de ce module dans une troisième forme de réalisation, non représentée structurellement ici, de son quatrième élément.

En se référant tout d'abord à l'ensemble des figures 1 à 6, il s'agit d'un module 6 d'interconnexion rapide de lignes téléphoniques qui s'apparente à ceux qui sont décrits dans le brevet US-A-4.614.396 précité et qui sont maintenant largement diffusés dans le commerce sous la référence générale "MX...".

Ce module 6 présente néanmoins de nombreuses particularités :

Il se compose de quatre éléments 11,21,18,22 qui s'assemblent mécaniquement et coopèrent du point de vue de la connectique, et il est conçu pour se monter sur un rail métallique 1, du genre "rail DIN", dont un des deux rebords longitudinaux 7 est percé de couples de lumières adjacentes 8,9 qui définissent entre elles-deux une étroite bande métallique 10, cet ensemble 8,9,10 étant prévu pour recevoir un contact-lyre de mise à la masse du module 6 qui, comme on le verra plus en détails ci-après, vient s'enfourcher sur l'étroite bande 10.

Un premier élément du module 6 est son élément de base 11 qui est prévu pour se fixer par enclipsage, grâce à des crochets 12,13, sur le rail métallique 1.

Cet élément de base 11, que l'on peut aussi appeler bague inférieure par analogie avec les dispositifs connus, est en matière plastique moulée comme l'ensemble du corps du module 6.

Il est percé, perpendiculairement à la direction longitudinale du rail 1 et sur la presque totalité de sa longueur, de deux canaux borgnes 14 (figures 3,5, et 6) qui sont dimensionnés pour recevoir les deux fils ou brins 15 de la ligne téléphonique monopaire d'arrivée, c'est-à-dire en général de la ligne du réseau téléphonique. Ces brins 15 sont visibles sur les figures 2 et 6.

A l'instar des modules "MX..." actuellement commercialisés, et en particulier à l'instar de celui décrit dans le document FR-A-2.661.283 précité, cet élément inférieur 11 emprisonne un écrou 16 (Figure 4) qui reçoit l'extrémité filetée de la, maintenant très classique, vis maîtresse médiane 17 qui, selon un même procédé que pour les dispositifs selon les deux documents US-A-4.614.396 et FR-A-2.661.283, vient, en se vissant dans cet écrou 16, assurer le rapprochement forcé au moins de l'élément inférieur 11 et de l'élément supérieur 18 du module 6, ce qui, comme on le réexpliquera pour ce module ci-après, assure classiquement la connexion autodénudante des deux paires de fils à interconnecter sans qu'il soit nécessaire d'utiliser autre chose qu'un simple tournevis.

L'élément 11 est traversé par une première moitié d'un double contact-lyre 19 (voir aussi la figure 10) qui est prévu pour venir enfourcher la bandelette correspondante 10 du rail 1 et assurer ainsi une connexion de masse.

Enfin, un double crochet en matière plastique 20, réalisé de moulage avec le corps de l'élément 11, vient se fixer pour enclipsage dans le corps, prévu à cet effet, du deuxième élément 21 du module 6, solidarisant ainsi fermement ces deux éléments 11 et 21.

Ce dernier élément 21, ou bague intermédiaire, a pour but d'assurer la connectique de liaison entre l'élément de base 11 d'une part et les deux derniers éléments 18 et 22 du module 6 d'autre part. Il se présente sous la forme d'un corps en matière plastique moulée dans lequel sont ménagés des logements pour une connectique métallique qui est réalisée, comme on l'expliquera ci-après en considérant également les figures 8, 9A, et surtout 10, sous forme d'un assemblage de bandelettes métalliques rigides ou semi-rigides et de contacts-lyre, ou en d'autres termes sous forme de circuits métalliques découpés.

D'ores et déjà, il convient à ce stade de signaler que cette connectique en circuits découpés a au moins pour but de relier électriquement, à l'intérieur du module 6, les deux couples 15 et 23 de brins de ligne à interconnecter. Une particularité de cette connectique est qu'elle présente, pour chaque brin, un point 24, 25 (Figure 8) d'interruption, dans cet élément intermédiaire 21, du circuit électrique d'interconnexion entre un brin d'arrivée 15 et le brin de départ correspondant 23. C'est dans le quatrième élément 22 que se trouvent les deux cavaliers qui, lorsqu'on enfiche cet élément 22 sur l'élement 21, viennent alors assurer la continuité électrique en court-circuitant respectivement les espaces libres 24 et 25.

Le troisième élément 18, ou bague supérieure, appelle moins de commentaires car dans l'ensemble il s'agit d'une demi-douille supérieure de connexion des deux fils ou brins de départ 23, typiquement vers une installation téléphonique d'abonné, qui est assez semblable à celles qui sont décrites dans les deux documents US-A-4.614.396 et FR-A-2.661.283 précités.

Il est donc traversé, de manière imperdable, par la vis maîtresse 17 qui sert à effectuer le rapprochement forcé des éléments 11 et 18, et par là-même les connexions autodénudantes des deux paires de brins 15 et 23. Deux canaux borgnes 26, parallèles entre eux et parallèles aux canaux 14, recoivent classiquement les deux brins de départ 23.

Ces canaux récepteurs 26 présentent toutefois une intéressante particularité. Comme on le voit en effet sur les figures 6 et 7, la partie interne de ces canaux est munie sur une petite moitié de sa longueur et au moins du côté de l'orifice 27 d'introduction du fil 23, d'ailettes longitudinales 28 qui sont réalisées de moulage.

Il convient à ce stade de mentionner que ces canaux de départ 26 sont destinés à être remplis, comme l'ensemble du module 6, d'un gel d'étanchéité auto-cicatrisant, tel qu'un gel Silicone de ce type. Il est ainsi possible de retirer maintes fois les brins de départ 23 pour faire des réparations ou changements, en les remplaçant éventuellement par d'autres brins, sans perte d'étanchéité grâce au caractère auto-cicatrisant du gel utilisé.

Les ailettes 28 ont pour but d'augmenter la surface d'adhérence du gel contre la paroi interne du canal 26, et par là-même de s'opposer au maximum à l'extraction de ce gel lorsque l'on retire le fil 23. Bien entendu, le fait que les orifices d'entrée 27 soient, en raison de l'adjonction d'un bouchon 53, de bien plus faible diamètre que le canal 26 vient renforcer cet effet.

Il est en outre prévu un quatrième élément 22 dont le corps, réalisé lui-aussi en matière plastique moulée, forme un réceptacle creux qui est fermé par un couvercle soudé 29, lui-même muni d'une tête 30 de préhension de cet élément 22. Ce couvercle 29 est percé de deux orifices 54 qui permettent d'effectuer un test de ligne.

L'élément 22 vient s'enficher sur une partie conjuguée 210 de l'élément intermédiaire 21, tandis que l'élément 18 vient coiffer la partie restante 211 de cet élément intermédiaire 21 (voir en particulier la figure 9 A).

A noter que, bien entendu, une cale plastique aisément amovible 31 est classiquement prévue entre les éléments 21 et 18 à la livraison du module 6 pour éviter que l'on ne serre à fond la vis 17 avant d'avoir préalablement introduit les fils d'arrivée 15 dans le module 6.

Comme on le voit en particulier sur les figures 9A et 9B, la base de l'élément 22 comporte cinq cosses métalliques, dont une cosse centrale 131 et deux paires de cosses latérales, respectivement 32,33 et 34,35, qui sont prévues pour s'enficher dans cinq contacts-lyres récepteurs respectifs 191, 482, 462, 492, 472, de la moitié 210 de l'élément intermédiaire 21.

Ces cinq cosses 131, 32 à 35, et leurs cinq contacts-lyres récepteurs précités sont aussi clairement visibles sur la vue éclatée représentée en figure 10, à laquelle on se reportera également maintenant pour une description plus détaillée de la connectique interne de ce module 6, cette description étant faite en particulier en liaison étroite avec la figure 8 qui est une vue par l'arrière de la connectique métallique emprisonnée dans le module 21, son corps plastique n'y étant pas représenté pour une bonne compréhension.

Cette connectique interne comprend :
. La double-lyre de masse précitée 19, qui comprend une lyre inférieure 190 qui vient enfourcher la bandelette réceptrice 10 du rail 1 (figures 2 et 5), et une lyre supérieure coaxiale 191, tournée angulairement de 90 degrés par rapport à la lyre 190, qui reçoit la cosse centrale 131 du quatrième élément 22.
. Cette cosse centrale 131 qui constitue un point de masse. Dans un premier des deux cas de figure représentés sur la figure 10, cette cosse de masse 131 est laissée non-connectée, et n'est donc pas utilisée, sauf comme bouchon. Dans ce cas, où l'élément 22 ne sert que pour assurer la continuité de ligne, son orifice central peut d'ailleurs être bouché. Dans le second cas de figure, elle fait partie d'un berceau 36 de réception d'un parasurtension tripolaire 37, (figures 4 et 6). Le réceptacle que constitue la partie interne de l'élément 22 est alors un réceptacle de réception d'un parasurtension tripolaire qui est tel que celui décrit très en détails dans la demande de Brevet en France n° 93.05049 déposée par la Demanderesse le 23 Avril 1993 sous le titre : "Module de protection enfichable pour module d'interconnexion rapide de lignes téléphonique". Le berceau 36 est par suite un berceau à trois paires de bras, dont une paire médiane 38 qui reçoit l'électrode de masse médiane du parasurtension 37 et deux paires latérales 39 et 40 qui pressent contre une cale thermofusible (non représentée) qui chevauche le corps du parasurtension 37.
. Les deux paires de cosses latérales précitées, respectivement 32,33 et 34,35, de l'élément 22. Dans le premier cas de figure précité (cosse 131 laissée en l'air), les cosses 32 et 33 forment simplement un cavalier métallique de continuité, et elles sont réalisées d'une seule pièce avec une plaque métallique 41 qui n'a d'autre utilité que de les maintenir mécaniquement dans la partie interne, formant réceptacle, de l'élément 22, et de permette l'accès à la ligne pour en effectuer un test à travers les deux orifices 54 précités. Il en est de même des deux autres cosses 34 et 35 qui forment, d'une seule pièce avec une autre plaque de fixation 42, un deuxième cavalier métallique de continuité. Dans le deuxième cas de figure précité (cosse 131 faisant partie d'un berceau 36 de réception d'un parasurtension tripolaire), les deux paires de cosses 32,33 et 34,35 forment toujours un cavalier métallique de continuité, mais les deux plaques de fixation 41 et 42 sont alors conformées, pour recevoir respectivement les deux coupelles latérales de connexion de ligne de parasurtension 37, en forme de cadre, respectivement 411 et 421, qui porte, comme il est décrit dans la demande de Brevet FR-93.05049 précitée, un couple, respectivement 412,413 et 422,423, de lamelles de contact élastiques aptes à venir appuyer fermement contre respectivement ces deux coupelles latérales du parasurtension 37.
. Les deux contacts auto-dénudants inférieurs 43,44 destinés aux deux fils de ligne d'arrivée 15. Ces deux contacts sont ici réalisés chacun sous la forme d'une lamelle métallique rigide qui présente une fente auto-dénudante 45 à sa partie inférieure. C'est cette fente 45 qui, en traversant le canal 14 lorsque l'élément supérieur 18 vient faire descendre, en les poussant, les contacts 43,44 dans l'élément inférieur 11 lorsque l'on visse la vis maitresse 17 dans l'écrou 16, vient enfourcher très étroitement le brin 15 en en réalisant ainsi la connexion auto-dénudante.
. Un premier couple de lamelles métalliques découpées 46,47 qui sont encastrées dans la base de l'élément intermédiaire 21 (Figure 8) et qui s'étendent parallèlement l'une à l'autre et dans le même sens que le rail 1. Chacune de ces lamelles 46,47 inclut un contact-lyre, respectivement 461, 462 et 471, 472 à chacune de ces extrémités. Ces quatre contacts-lyre sont tous dirigés dans le même sens que le contact-lyre 191, c'est-à-dire en direction des éléments supérieurs 18 et 22. Les deux contacts-lyre 461 et 471 reçoivent respectivement les deux contacts auto-dénudants 43 et 44 comme il est représenté sur la figure 10. Les deux contacts-lyre 462 et 472 reçoivent respectivement les deux cosses 33 et 35 comme on le voit également sur cette figure 10.
. Un deuxième couple de lamelles métalliques découpées 48 et 49 qui sont (Figure 8) encastrées dans l'élément intermédiaire 21 à proximité respective des lamelles 46 et 47, et sont sensiblement parallèles à ces dernières. Comme mentionné précédemment, les lamelles 48 et 49 sont placées dans l'élément 21 de façon à définir deux espaces d'isolement 24 et 25 (Figure 8), la continuité électrique étant assurée par les deux cavaliers 34-42-35 (ou 34-421-35) et 32-41-33 (ou 32-411-33). Il est en conséquence prévu un contact-lyre, respectivement 482 et 492, à l'extrémité inférieure de chaque lamelle 48 et 49, c'est-à-dire à l'extrémité qui est proche du contact-lyre correspondant, 462 et 472, de l'autre branche ou lamelle, 46 et 47. Le contact-lyre 482 reçoit la cosse 32, tandis que le contact-lyre 492 reçoit la cosse 34, la continuité électrique étant alors de ce fait assurée entre les lamelles 46 et 48 d'une part et 47 et 49 d'autre part. Comme précédemment, et bien-entendu, les contacts-lyre 482 et 492 sont découpés d'un seul tenant avec les lamelles respectives 48 et 49. L'autre extrémité des lamelles 48 et 49 comporte, à l'instar des lamelles 46 et 47, un autre contact-lyre, respectivement 481 et 491. Ces contacts-lyre 481 et 491 reçoivent les deux contacts auto-dénudants 50 et 51 qui sont associés aux deux fils de ligne de départ 23. Ce sont des contacts plats, comme pour les contacts 43 et 44. Ils sont différents cependant par le fait qu'ils sont conformés de manière que leur fente auto-dénudante 52 ne soit pas rigoureusement rigide, comme c'est le cas pour tous les contacts auto-dénudants connus jusqu'à présent, mais présente au contraire une semi-rigidité suffisante pour pouvoir s'écarter sous l'action de l'âme métallique du fil 23 qui y est introduit. La rigidité est cependant déterminée suffisante pour que cette introduction provoque le sectionnement de la gaine de ce fil, c'est-à-dire son auto-dénudage. Il en résulte que ce module peut recevoir des fils d'abonné 23 de divers calibres, et dont l'âme est aussi bien en un métal dur, tel que l'acier, qu'en un métal ductile, tel que le cuivre. Ceci n'était pas possible avec les contacts auto-dénudants de l'art antérieur, car l'introduction d'un fil d'acier dans la fente auto-dénudante d'un de ces contacts classiques avait pour résultat d'agrandir cette fente : il n'était ensuite plus possible d'y introduire des fils de plus petits diamètres.

La figure 11 est un schéma électrique du module 6 lorsque son quatrième élément 22 est simplement équipé de la cosse 131 seule (laissée "en l'air" du point de vue électrique) et des cavaliers 32-41-33 et 34-42-35 qui forment alors de simples fiches de continuité.

On constate finalement que ce module 6 forme un quadripôle à deux bornes d'entrée 43,44 et deux bornes de sortie 50,51, une borne de masse 131 étant en outre prévue, mais n'étant pas utilisée dans la configuration de la figure 11, configuration qui est finalement déterminée par la constitution propre du quatrième élément, enfichable, 22.

La figure 12 est un schéma électrique du module 6 lorsqu'il reçoit un quatrième élément 22 qui est constitué en module enfichable de protection contre les surtensions, dont les coups de foudre. Il contient alors le berceau de masse 36 précité, ainsi que les cavaliers 32-411-33 et 34-421-35 (voir figure 10), et est apte à recevoir un parasurtension 37, à l'instar du module de protection décrit dans la demande FR-93.05049 précitée.

Le quatrième élément 22 forme alors à la fois élément de continuité électrique, comme en Figure 11, et module de protection contre les surtensions, comme il est clairement montré sur la Figure 12.

Le fait que ce module 6 soit à cinq points d'accès (43,44,50,51,131), permet de concevoir des éléments enfichables 22 contenant toutes sortes de circuits additionnels, dont un autre exemple possible est donné sur la figure 13.

Le circuit de cette figure 13 se différencie de celui selon Figure 12 par le fait que, sur chaque brin de ligne 15-23, il est prévu en outre d'une part une résistance à Coefficient de Température Positif (ou CTP), respectivement 61 et 62, qui est branchée en série sur ce brin de ligne, et d'autre part une varistance, respectivement 63 et 64 qui est branchée entre la borne aval, soit respectivement 50 et 51, de chaque CTP 61,62, et la masse. On réalise ainsi non seulement, grâce au parasurtension 37, une protection contre les surtensions élevées, mais aussi, grâce aux CTP 61,62 et aux varistances 63,64, une protection contre les surtensions plus faibles qui sont insuffisantes pour déclencher le parasurtension 37.

Ceci peut être très utile dans les pays qui sont encore alimentés par une tension secteur en 110 volts, très proche donc de la tension téléphonique de sonnerie. On est alors contraint de choisir un parasurtension 37 qui déclenche pour une tension nettement supérieure à 110 volts, afin d'éviter qu'il ne s'amorce à chaque appel téléphonique. Les CTP et varistances 61 à 64 servent alors comme organes de sécurité en cas de surtension accidentelle créée par un contact entre un fil de ligne téléphonique et un fil du secteur à 110 volts.

Comme il va de soi, l'invention n'est pas limitée aux exemples qui viennent d'être décrits, et en particulier d'autres circuits internes à l'élément enfichable 22 sont envisageables.

## Revendications

1. Module d'interconnexion rapide de deux lignes téléphoniques monopaires (15,23),
caractérisé en ce qu'il est constitué de quatre éléments assemblables sur un rail métallique (1) de support et de mise à la masse :
. un premier élément (11), ou élément de base de connexion de la ligne d'arrivée, qui vient se fixer sur ce rail métallique (1), et qui au moins comporte deux canaux (14) d'introduction des deux fils (15) de la ligne d'arrivée, des moyens (8,9,10) étant en outre prévus pour connecter au rail métallique (1) un contact métallique (19) de mise à la masse qui traverse cet élément de base (11)
. un deuxième élément (21), ou élément intermédiaire, qui vient coiffer le premier élément (11) et qui contient la majeure partie (43 à 52) de la connectique de liaison entre ces deux lignes téléphoniques (15,23), cette connectique se présentant sous la forme de pièces métalliques rigidés ou semi-rigides qui sont encastrées dans cet élément intermédiaire, une discontinuité (24,25) de liaison électrique y étant toutefois ménagée pour chacune des deux liaisons de ligne (46-48,47-49) et cette connectique comprenant nécéssairement d'une part deux contacts métalliques (43,44) à chacun au moins une fente autodénudante (45) qui sont proéminents en direction du rail métallique (1) de façon à recevoir, en action de connexion autodénudante, les deux fils précités (15) de la ligne d'arrivée préalablement introduits dans lesdits canaux (14) dudit élément de base (11), et comprenant nécessairement d'autre part deux autres contacts métalliques (50,51) à chacun au moins une fente autodénudante (52) qui sont à contrario proéminents en direction opposée au rail métallique (1) de façon à pouvoir recevoir, en action de connexion autodénudante, les deux fils (23) de la ligne de départ, qui sont à connecter aux deux fils respectifs (15) de ladite ligne d'arrivée
. un troisième élément (18), ou élément supérieur de connexion de la ligne de départ (23), qui est constitué, de manière connue en soi, comme une demi-douille supérieure de connexion rapide auto-dénudante d'une ligne monopaire, et qui est donc classiquement pourvu de deux canaux parallèles (26) de réception et de guidage des deux brins (23) de ligne à raccorder, ce troisième élément (18) venant coiffer une première partie (211) du deuxième élément en enfourchant, en coopération d'action de connexion autodénudante, lesdits deux autres contacts métalliques autodénudants (50,51), et ce troisième élément (18) étant classiquement traversé par une vis (17), médiane et perpendiculaire au rail métallique (1), qui traverse totalement aussi le deuxième élément (21) ainsi qu'au moins une partie du premier élément (11) pour venir se visser dans un écrou (16) ou taraudage en assurant alors le rapprochement forcé des trois éléments précités (11,21,18) et par suite la connexion autodénudante des quatre brins de ligne (15,23) :
. et un quatrième élément (22) qui vient coiffer, en s'enfichant, la partie restante (210) du deuxième élément (21) en étant ainsi positionné côte-à-côte du troisième élément (18) et sensiblement au même niveau que ce dernier, ce quatrième élément (22) s'enfichant ainsi par cinq cosses (131, 32 à 35) de connexion électrique, dont une cosse (131) de liaison audit contact métallique (19) de mise à la masse qui lui-même traverse le premier (11) et le deuxième élément (21), et dont deux autres paires de cosses (32,33 et 34,35) qui se connectent respectivement, à chaque côté respectif desdites deux discontinuités de liaison électrique (24,25) qui sont prévues dans le deuxième élément (21), et ce quatrième élément (22) formant réceptacle pour un circuit électrique (41,42 ou 411,421, 36,37) qui est branché sur ces cinq cosses (131, 32 à 35) et qui au minimum vient assurer les deux liaisons électriques manquantes, en raison desdites discontinuités (24,25), dans la connectique que contient le deuxième élément (21).

2. Module selon la revendication 1, caractérisé en ce que ses contacts auto-dénudants (43,44,50,51) sont réalisés sous forme de lamelles.

3. Module selon la revendication 2, caractérisé en ce que les deux contacts auto-dénudants (50,51) qui sont associés aux brins de ligne de départ (23) présentent une élasticité suffisante pour que leur fente auto-dénudante (52) s'écarte lors de l'introduction, dans cette fente, de l'âme du brin de ligne (23), après dénudage de ce brin par cette fente.

4. Module selon l'une des revendications 1 à 3, caractérisé en ce que toute la connectique interne à celui-ci est réalisée sous forme de lamelles métalliques découpées (19,46 à 48,43,44,50,52,131,36, 32-41-33, 34-42-35, 32-411-33, 34-421-35).

5. Module selon l'une des revendications 1 à 4, caractérisé en ce que le quatrième élément (22) est conformé en réceptacle pour un parasurtension (37).

6. Module selon l'une des revendications 1 à 5, caractérisé en ce que le quatrième élément reçoit un circuit de protection (61 à 64) contre les surtensions qui au moins comporte une résistance à Coefficient de Température Positif (61,62) en série sur chaque fil de ligne.

7. Module selon l'une des revendications 1 à 6, caractérisé en ce que la partie interne des canaux (26) d'introduction des fils de départ (23) dans le troisième élément (18) est pourvue d'ailettes (28) de rétention d'un gel d'étanchéité auto-cicatrisant.

## Patentansprüche

1. Schnellverbindermodul für zwei zweiadrige Fernsprechleitungen (15, 23), dadurch gekennzeichnet, daß er aus vier zusammensetzbaren Einheiten auf einer Träger- und Erdungsschiene (1) aus Metall besteht:
- eine erste, auf der Metallschiene (1) befestigte Einheit (11) oder Basiseinheit zum Anschluß der ankommenden Leitung, mit zumindest zwei Kanälen (14) zum Einführen von zwei Adern (15) der ankommenden Leitung, wobei außerdem Mittel (8, 9, 10) vorgesehen sind, um einen die Basiseinheit (11) durchquerenden, metallischen Erdungskontakt (19) mit der Metallschiene (1) zu verbinden;
- eine zweite, die erste Einheit (11) überdeckende Einheit (21) oder Zwischeneinheit, die den größeren Teil (43 bis 52) der Verbindungsanschlüsse zwischen den zwei Fernsprechleitungen (15, 23) umfaßt, wobei die Anschlüsse die Form von starren oder halbstarren, in diese Zwischeneinheit eingelassenen Metallstücken haben, jedoch jede der beiden Leitungsverbinder (46, 48; 47, 49) eine Unterbrechung (24, 25) der elektrischen Verbindung aufweist, und die Anschlüsse notwendigerweise zum einen zwei Metallkontakte (43, 44) mit jeweils zumindest einem selbsttätig abisolierend wirkenden Schlitz (45) aufweisen, die in Richtung der Metallschiene (1) vorspringen, so daß sie bei selbsttätig abisolierend wirkender Herstellung der Verbindung die zwei obenerwähnten, zuvor in die Kanäle (14) der Basiseinheit (11) eingeführten Adern (15) der ankommenden Leitung aufnehmen, und die notwendigerweise zum anderen zwei andere Metallkontakte (50, 51) mit jeweils zumindest einem selbsttätig abisolierend wirkenden Schlitz (52) aufweisen, die umgekehrt in der von der Metallschiene (1) abgewandten Richtung vorspringen, so daß sie bei selbsttätig abisolierend wirkender Herstellung der Verbindung die zwei mit den zwei entsprechenden Adern (15) der ankommenden Leitung zu verbindenden Adern (23) der abgehenden Leitung aufnehmen können;
- eine dritte Einheit (18) oder obere Einheit zum Anschluß der abgehenden Leitung (23), in an sich bekannter Art wie eine obere Halbschale einer selbsttätig abisolierend wirkenden Schnellverbindung einer zweiadrigen Leitung ausgebildet, und folglich wie üblich mit zwei parallelen Kanälen (26) zur Aufnahme und Führung von zwei Adern (23) der anzuschließenden Leitung versehen, wobei diese dritte Einheit (18) einen ersten Bereich (211) der zweiten Einheit überdeckt, indem sie bei selbsttätig abisolierend wirkender Herstellung der Verbindung die zwei anderen selbsttätig abisolierend wirkenden Metallkontakte (50, 51) umgreift, und wobei diese dritte Einheit (18) herkömmlicherweise mittig und rechtwinklig zur Metallschiene (1) von einer Schraube durchgriffen wird, die auch die zweite Einheit (21) vollständig sowie zumindest einen Teil der ersten Einheit (11) durchdringt und dann in eine Mutter (16) oder ein Gewinde eingreift, wodurch die drei obenerwähnten Einheiten (11, 21, 18) miteinander verspannt werden und dabei die selbsttätig abisolierend wirkende Verbindung der vier Leitungsadern (15, 23) bewirkt wird;
- eine vierte, den verbleibenden Bereich (210) der zweiten Einheit (21) unter Herstellung einer Steckverbindung übergreifende Einheit (22), und die so direkt neben der dritten Einheit (18) und exakt in der selben Ebene wie die letztere liegt, wobei diese vierte Einheit (22) mittels fünf Kontaktstiften (131, 32 bis 35) zur elektrischen Verbindung aufgesteckt ist, von denen ein Kontaktstift (131) zu dem die erste (11) und die zweite Einheit (21) durchgreifenden, metallischen Erdungskontakt (19) Verbindung hat, und von denen die zwei anderen Kontaktstiftpaare (32, 33 und 34, 35) jeweils die Verbindung beidseits der in der zweiten Einheit (21) vorgesehenen, zwei Unterbrechungen der elektrischen Verbindung (24, 25) herstellen, und wobei diese vierte Einheit (229) ein Gehäuse für eine an die fünf Kontaktstifte (131, 32 bis 35) angeschlossene elektrische Schaltung (41, 42 oder 411, 421, 36, 37) bildet, die zumindest die zwei wegen der Unterbrechnungen (24, 25) fehlenden elektrischen Verbindungen der in der zweiten Einheit (21) enthaltenen Anschlüsse gewährleistet.

2. Modul nach Anspruch 1, dadurch gekennzeichnet, daß seine selbsttätig abisolierend wirkenden Kontakte (43, 44, 50, 51) in Form von Lamellen ausgebildet sind.

3. Modul nach Anspruch 2, dadurch gekennzeichnet, daß die zwei selbsttätig abisolierend wirkenden, mit den Adern der abgehenden Leitung (23) verbundenen Kontakte (50, 51) eine ausreichende Elastizität aufweisen, damit ihre selbsttätig abisolierend wirkenden Schlitze (52) sich während des Einführens der Seele der Leitungsader (23) in diesen Schlitz nach Abisolierung dieser Ader durch diesen Schlitz aufspreizen und sich formschlüssig um die Seele legen.

4. Modul nach einem der Ansprüche 1 bis 3, dadurch gekennzeichnet, daß alle internen Anschlüsse als gestanzte Metallamellen ausgebildet sind (19, 46 bis 48, 43, 44, 50, 52, 131, 36, 32-41-33, 34-42-35, 32-411-33, 34-421-35).

5. Modul nach einem der Ansprüche 1 bis 4, dadurch gekennzeichnet, daß die vierte Einheit (22) als Gehäuse zur Aufnahme eines Überspannungsschutzes (37) ausgebildet ist.

6. Modul nach einem der Ansprüche 1 bis 5, dadurch gekennzeichnet, daß die vierte Einheit eine zumindest einen Widerstand mit positivem Temperaturkoeffizienten (61, 62) in Serie zu jedem Draht der Leitung umfassende Schutzschaltung (61 bis 64) gegen Überspannungen aufnimmt.

7. Modul nach einem der Ansprüche 1 bis 6, dadurch gekennzeichnet, daß der innere Bereich der Kanäle (26) zur Einführung der abgehenden Adern (23) in der dritten Einheit (18) mit Rückhaltestegen (28) für ein selbstheilendes Dichtgel versehen ist.

## Claims

1. module for the rapid interconnection of two monopair telephone lines (15, 23),
characterized in that it is constituted by four elements adapted to be assembled on a metal rail (1) for support and grounding:
• a first element (11), or base element for connection of the incoming line, which is fixed on this metal rail (1), and which at least comprises two channels (14) for introduction of the two wires (15) of the incoming line, means (8, 9, 10) further being provided to connect to the metal rail (1) a metal contact (19) for grounding which traverses this base element (11);
• a second element (21), or intermediate element, which covers the first element (11) and which contains the major part (43 to 52) of the connections for linkage between these two telephone lines (15, 23), these connections being in the form of rigid or semi-rigid metal pieces, which are fitted in this intermediate element, a discontinuity (24, 25) of electrical linkage being, however, made therein for each of the two line links (46-48, 47-49), and these connections necessarily comprising, on the one hand, two metal contacts (43, 44) each with at least one self-stripping slot (45) which are prominent in the direction of the metal rail (1) so as to receive, in self-stripping connection action, the two said wires (15) of the incoming line previously introduced in said channels (14) of said base element (11), and necessarily comprising, on the other hand, two other metal contacts (50, 51) each with at least one self-stripping slot (52) which are, a contrario, prominent in the direction opposite the metal rail (1) so as to be able to receive, in self-stripping connection action, the two wires (23) of the outgoing line, which are to be connected to the two respective wires (15) of said incoming line;
• a third element (18), or upper element for connection of the outgoing line (23), which is constituted, in manner known per se, as an upper half-bush for rapid, self-stripping connection of a monopair line, and which is therefore conventionally provided with two parallel channels (26) for receiving and guiding the two strands (23) of line to be connected, this third element (18) covering a first part (211) of the second element by mounting, in cooperation with self-striping connection action, said other two self-stripping metal contacts (50, 51), and this third element (18) being conventionally traversed by a screw (17), median and perpendicular to the metal rail (1), which also completely traverses the second element (21) as well as at least a part of the first element (11) to screw in a nut (16) or tapping, in that case forcing the said three elements (11, 21, 18) to come together and consequently ensuring, the self-stripping connection of the four line strands (15, 23);
• and a fourth element (22) which covers, by fitting, the remaining part (210) of the second element (21), thus being positioned side by side with the third element (18) and substantially at the same level as the latter, this fourth element (22) thus fitting by five terminals (131, 32 to 35) for electrical connection, of which one terminal (131) for linkage to said metal grounding contact (19) which itself traverses the first (11) and the second element (21), and of which two other pairs of terminals (32, 33 and 34, 35) which are respectively connected to each respective side of said two discontinuities (24, 25) for electrical linkage which are provided in the second element (21), and this fourth element (22) forming receptacle for an electric circuit (41, 42 of 411, 421, 36, 37) which is connected on these five terminals (131, 32 to 35) and which at the minimum ensures the two missing electrical linkages, by reason of said discontinuities (24, 25), in the connections contained in the second element (21).

2. Module according to Claim 1, characterized in that its self-stripping contacts (43, 44, 50, 51) are made in the form of blades.

3. Module according to Claim 2, characterized in that the two self-stripping contacts (50, 51) which are associated with the outgoing line strands (23) present a sufficient elasticity for their self-stripping slot (52) to move apart, during the introduction in this slot of the core of the line strand (23), after stripping of this strand by said slot.

4. Module according to one of Claims 1 to 3, characterized in that all the connections thereinside are made in the form of cut-out metal blades (19, 46 to 48, 43, 44, 50, 51, 131, 36, 32-41-33, 34-42-35, 32-411-33, 34-421-35).

5. Module according to one of Claims 1 to 4, characterized in that the fourth element (22) is formed as a receptacle for an overvoltage arrester (37).

6. Module according to on e of Claims 1 to 5, characterized in that the fourth element receives a circuit (61 to 64) for protection against overvoltages which at least comprises a resistor with positive temperature coefficient (61, 62) in series on each line wire.

7. Module according to one of Claims 1 to 6, characterized in that the inner part of the channels (26) for introduction of the outgoing lines (23) in the third element (18) is provided with fins (28) for retention of a self-closing sealing gel.
